(19) Europäisches Patentamt / European Patent Office / Office européen des brevets

(11) **EP 2 158 260 B1**

(12) **EUROPEAN PATENT SPECIFICATION**

(45) Date of publication and mention
of the grant of the patent:
**22.02.2017 Bulletin 2017/08**

(21) Application number: **08749295.5**

(22) Date of filing: **02.05.2008**

(51) Int Cl.:
*C08K 5/09* (2006.01)          *C09D 5/20* (2006.01)
*C09D 7/12* (2006.01)          *C09D 131/02* (2006.01)

(86) International application number:
**PCT/EP2008/003548**

(87) International publication number:
**WO 2008/141721 (27.11.2008 Gazette 2008/48)**

(54) **AQUEOUS POLYMERIC DISPERSION CONTAINING AN ORGANIC ACID**

WÄSSRIGE POLYMERDISPERSION, DIE EINE ORGANISCHE SÄURE ENTHÄLT

DISPERSION POLYMÈRE AQUEUSE CONTENANT UN ACIDE ORGANIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.05.2007 EP 07010016**

(43) Date of publication of application:
**03.03.2010 Bulletin 2010/09**

(73) Proprietor: **ARKEMA B.V.**
**3196 Ke Vondelingenplaat-Rotterdam (NL)**

(72) Inventors:
• **BRINKMAN, Hein**
**7218 LA Almen (NL)**
• **GENTILHOMME, Philippe**
**60870 Brenouille (FR)**
• **LEVEQUE, Virginie**
**64121 Serres Castet (FR)**
• **SAIJA, Leo**
**42011 Bagnolo in Piano (RE) (IT)**

(74) Representative: **Killis, Andréas**
**ARKEMA France**
**DRD/DPI**
**420, rue d'Estienne d'Orves**
**92705 Colombes Cedex (FR)**

(56) References cited:
**WO-A-00/56823          WO-A-2006/056561
US-A- 3 287 300          US-A- 3 906 135
US-A1- 2005 154 123**

• **DATABASE WPI Week 197418 Derwent
Publications Ltd., London, GB; AN 1974-33366V
XP002442236 -& JP 48 081925 A (KANEBO LTD)
1 November 1973 (1973-11-01) -& DATABASE CA
[Online] CHEMICAL ABSTRACTS SERVICE,
COLUMBUS, OHIO, US; 12 May 1984 (1984-05-12),
YAMAMOTO, MAKOTO ET AL: "Vinyl acetate and
acrylate polymer emulsion compositions with
low film-forming temperatures" XP002483579
retrieved from STN Database accession no.
1974:96803**

EP 2 158 260 B1

**Description**

The present invention relates to specific aqueous polymeric dispersions of polymers with coalescing and/or plasticizing agents for reducing the minimum film-forming temperature (MFFT) of the dispersions and optionally for decreasing the glass transition temperature (Tg) of the polymers, based on specific acids, for specific coating applications, including food coatings or adhesive applications or other applications, including treatment compositions or construction chemical compositions.

EP 113 443 discloses the preparation of aqueous dispersions of plasticized polymers by processes other than emulsion polymerisation. These polymeric dispersions comprise particles of water-insoluble thermoplastic polymers and a plasticizing composition constituted of a water-soluble salt of a carboxylic acid in an amount sufficient to emulsify the polymer and to stabilize the dispersions. They may be coalesced by lowering the pH until the organic acid salt is converted into the acid form. But this means that in the free acid form, the said organic acid exhibits the disadvantage of being no longer able to stabilize the said polymeric dispersion.

FR 1 053 706 describes films of polyvinyl acetate emulsions which can be dried at lower temperatures than Tg, the aspect and the properties of these films differing not at all from those dried at higher temperatures, when small quantities of acetic acid are added to the polyvinylic polymeric emulsion.

US 3,287,300 discloses polyvinyl ester emulsions comprising aliphatic branched monocarboxylic acids in order to depress the MFFT, without causing any coagulation. US 3,287,300 also discloses that lower range carboxylic acids cause coagulation and very unpleasant odour, which renders them completely unsuitable for industrial purposes.

Water based acrylic and vinylic homopolymer and copolymer dispersions are usually obtained by emulsion polymerisation in presence of anionic and/or non ionic surfactants. The resulting lattices are characterized by specific MFFT and mechanical properties depending on their monomer composition and type of structure. The possible presence of high amounts of protective colloids, more particularly in the case of waterborne dispersions of vinyl acetate homopolymers and copolymers, may decrease the MFFT due to the plasticizing effect of the water with regards to these hydrophilic materials (colloids). But in the most common applications (in wood adhesives, for example), the use of big amounts of these protective colloids, can influence negatively the water resistance. Quite often, in order to allow their application at designed temperatures and/or to reach the required final properties it may be necessary to modify such polymer dispersions in terms of MFFT and/or Tg, by using suitable coalescing solvents and/or plasticizers. In the case of coalescing solvents, the reduction of MFFT is usually obtained by the use of specific organic compounds (coalescing solvents) which are able to favour the particle coalescence at lower temperature. The general use of high boiling point organic solvents, like glycols or glycol ethers may have a negative influence on the final application because of their tendency to partially remain in the polymer film, for example the creep resistance being low in wood adhesives.

In the case of plasticizers not only the MFFT, but also the Tg and the mechanical properties will be permanently affected. Due to their chemical nature and their good compatibility with a large range of different polymer dispersions, phthalates are still the most used class of plasticizers. Nevertheless, phthalates are considered to be harmful for health and environment so that there is a need to find a suitable alternative solution.

The general technical problem to solve with respect to prior art is to find a suitable selection of coalescing agents having higher efficiency at lower contents and in more particular cases, comprising among them permanent plasticizers, enabling by an MFFT suitable decrease, the film formation (or filmification) ability to a broad range of polymeric aqueous dispersions, based on either hydrophilic and/or hydrophobic polymers for a broad range of uses. Such a filmification is enabled for relatively difficult general cases, comprising filmification for high Tg (Tg > 20°C, corresponding to MFFT higher than 25°C and more particularly from 30 to 70°C) polymer dispersions, for improved higher (enhanced) mechanical performances and for higher blocking resistance. For other possible uses at low temperature conditions (< 10°C), still in a broad range of applications, often requiring multiple specific applicative performances to be fulfilled by the final product which is issued from the said dispersions, more particularly lower toxicity, complying with the EU and US regulations, more specifically for direct food contact, is required in addition to other performances. Polymer dispersions can be classified depending on their sensitivity to water in either hydrophilic (otherwise called "polar polymers") or hydrophobic (otherwise called "non polar polymers"), on the base of a definition according to the present invention, further explained below, in the present description. Of course, it is a difficult task to find on the base of prior art, coalescing agents suitable for both hydrophilic and hydrophobic polymer dispersions, with higher efficiency at lower contents, as now proposed by the present invention.

Generally acting as coalescing agents by reducing MFFT, the said agents may additionally, firstly act as temporary plasticizers of the polymer to favour the film formation (otherwise called filmification) of the aqueous polymeric dispersions, for which it is difficult to form a film at room/low temperature conditions, without affecting the final mechanical performances. Temporary plasticizers according to this first case have specifically higher volatility (lower molecular weight range) and consequently, after efficiently contributing to the film formation mechanism, they can be released from the formed polymeric film in a relatively short time, thus allowing the relative quick recovering of the initial (proper) polymer mechanical properties. Such agents are specifically targeted for applications in certain types of adhesives, specific food coatings and surface protective coatings. In a second possible case, in addition to their general role in promoting the film formation, they may act as permanent plasticizers (affecting both MFFT and Tg of the polymer), thus modifying the proper polymer mechanical properties and the resulting applicative performances of polymeric films, resulting from the corresponding aqueous dispersions containing these agents.

The present invention provides a satisfactory solution to the problem of improving the efficiency of the coalescing effect at reduced contents of coalescing agents, with optionally the possibility to recover the intrinsic polymer mechanical properties. Indeed, the solution of the specific problem of the invention does fulfil an excellent compromise in terms of efficiency of the coalescing effect, of compatibility and of homogeneity of the dispersion, and of the film final applicative performances, with an effective control of the final mechanical and viscoelastic polymeric performances.

The first subject matter of the present invention is an aqueous polymeric dispersion.

The second subject matter relates to a process for the preparation of the said aqueous polymeric dispersion.

The invention does also relate to a composition comprising at least one aqueous polymeric dispersion as defined according to the invention.

Finally, the invention concerns the use of such a dispersion in an aqueous paint or varnish or ink or glue or adhesive or fibre sizing composition or a leather or construction chemical compositions, a textile treatment composition or in a food protective coating.

It is also part of the invention a specific method for improving the peelability of industrial and food protective coatings.

More specifically, the first subject-matter of the invention is an aqueous polymeric dispersion comprising :

a) at least one polymer in aqueous dispersion, having a MFFT between 0 and 100°C, preferably from 5 to 50°C, and

b) from 0.05 to 30%, preferably from 0.1 to 30% and more preferably 0.5 to 30% by weight with respect to the said aqueous dispersion a) of at least one organic carboxylic acid selected from $C_{16}$ to $C_{25}$ acids or from their mixtures with $C_1$-$C_4$ acids, the said organic carboxylic acid and its content in the said aqueous dispersion being so selected to be compatible with the said aqueous polymeric dispersion a) as such (aqueous dispersion), and with the said polymer as polymer itself, the said acid b) being in its acid form, with the pH of the said aqueous dispersion a), being adjusted to be lower than the pKa of the said organic carboxylic acid , and in that the said dispersion a) has a solids content from 25 to 70%, preferably from 35 to 70%, more preferably from 35 to 60%, even more preferably from 40 to 60% w/w and with a weight ratio of the acid b) with respect to the said polymer, not exceeding 50%.

The term "organic carboxylic acid " should be interpreted as
meaning organic carboxylic acids bearing at least one, preferably one or two and more preferably one carboxylic acid group, the indicated carbon atom numbers corresponding to the total C number including carboxylic groups (for example $C_2$ indication corresponding to acetic acid).

The term "acid form" should mean that the pH conditions of the said (initial) aqueous dispersion a) and of the aqueous dispersion resulting from the addition of b) should be adjusted to finally have the said acid form. Generally, this means that the pH should be adjusted to be lower than the corresponding pKa constant of the said acid b) (characteristic corresponding to the acidity constant of the said acid, well known characteristic to a man skilled in the art). For short chain acids, the plasticizing effect is rather linked to the carboxy groups (molar amount). For the $C_{16}$ to $C_{25}$ acids with higher chain length , the plasticizing effect is rather linked to the fatty chain length, under the condition that the compatibility with the dispersed polymer is not affected.

The solids content of the said dispersion as defined according to the present invention varies from 25 to 70% preferably from 35 to 70% and more preferably from 35 to 60%, even more preferably from 40 to 60%. The % content of the said acid b) is expressed in weight of pure acid.

The term "compatible with the said aqueous dispersion a)" should be interpreted as meaning that the said organic carboxylic acid can be added in the relative proportions thereof present in the said dispersion, by forming an homogeneous dispersion without phase separation or sedimentation resulting from this addition and mixing, which should correspond to a coagula or agglomerate or grit content, lower than 200 ppm on a 100 MESH (about 150 microns) filter. As it concerns the term "compatible with the said polymer as polymer itself", it should be interpreted as meaning that after film formation (by coalescence of the resulting "aqueous dispersion a) + b)"), the resulting dry film should be homogeneous, without any visual presence of phase separation or of segregates (no film defects due to this phase segregation).

The percentage of the acid content is expressed by weight and it may generally vary from 0,05 to 30%, preferably 0.1 to 30% and more preferably 0.5 to 30% by weight depending on the targeted applicative performances and uses. In general, this acid content will depend on the targeted desired technical effect of the said acid and the corresponding final use.

For a targeted plasticizing effect suitable for high Tg polymers (> 20°C) in aqueous dispersions difficult to coalesce at lower temperature due to high initial MFFT being > 25°C, preferably from 30 to 70°C, a higher acid content may be used, from 5 to 30%, preferably from 10 to 20% with respect to the aqueous dispersion a). For lower Tg polymers in aqueous dispersion having MFFT lower than 25°C, generally the acid content may vary from 0.05 to 15%, preferably from 0.1 to 10% and more preferably from 0.1 to 5% by weight with respect to the aqueous dispersion a). Depending on the targeted applicative performances and the initial (proper) polymer Tg of the said dispersion, particularly when the Tg is lower than 20°C and the corresponding MFFT of the aqueous polymeric dispersion is lower than 25°C, the organic carboxylic acid content with respect to dispersion a) may vary from 0.05 to 15%, preferably from 0.05 to 5%, and more preferably from 0.5 to 3% by weight with respect to the total weight of the said aqueous dispersion. Acids with higher chain length range ($C_9$ to $C_{25}$) may be particularly suitable for facilitating the film formation at room/low temperature conditions and for giving permanent plasticizing effect of aqueous polymeric dispersions, both for polar and non polar polymers, while lower range chain lengths, preferably in $C_1$-$C_4$ may be more suitable for temporary plasticizing effect, enabling the recovering of the mechanical performances on the final polymer film.

Preferably, the said organic carboxylic acid b) is linear. More preferably, the said acid b) in the range from $C_{16}$ to $C_{25}$ may bear at least one ethylenic unsaturation, this last category of acids being under liquid state at room temperature, they show an easier workability. Particularly preferred as acid b) is a linear acid in the $C_{16}$ to $C_{25}$ range and it bears one or two or three ethylenic unsaturations.

The $C_{16}$ to $C_{25}$ acids could be the following ones: oleic, isostearic, linoleic, linoleic, ricinoleic, myristoeic, vaccenic or palmitoleic acids.

More preferably, the said acids are mixtures of acids which may be commercially available products or blends of them, comprising at least 50 and more preferably at least 70% w/w of $C_{16}$ and/or $C_{18}$ acids. More specifically, a commercial oleic acid composition may comprise from 50 to 80% of oleic acid ($C_{18}$ with one unsaturation) and 5 to 15% of palmitic ($C_{16}$ saturated)/palmitoleic acid ($C_{16}$ acid with one unsaturation) and around 10-12% of linoleic acid ($C_{18}$ acid with two unsaturations). As examples of some commercial oleic acid compositions which are mixtures and suitable for the purpose of the present invention, we may cite Nouracid 1880 and 1885 from OLEON having from 75 to 80% of oleic acid or OL-600 or PL-800 from P & G (Procter & Gamble) having a content of oleic acid from 56 to 75%. More specifically, the oleic acid used in the experimental part of this description is from Prolabo under reference VWR and has the following detailed composition : 80.0% of oleic acid, 11.2% of linoleic acid, 5.8% of palmitic acid and 1.3% of stearic acid.

According to a last preferred embodiment, the said organic carboxylic acid can be a mixture of at least one $C_1$ to $C_4$ acid with at least one $C_{16}$ to $C_{25}$ acid preferably bearing at least one ethylenic unsaturation. An adjusted mixture (by selecting the acid length and/or acid content and/or the total number of acids participating in the mixture) may enable finely tailored applicative performances adapted to particular cases presenting (facing) either compatibility problems or applicative performance reduction problems, if only (a single) one acid is used alone. In fact, this kind of problems may be met, depending on, either the acid nature and acid content and/or on the polymer nature on which the said aqueous dispersion a) is based.

In fact, the said polymer of the said aqueous dispersion a), according to the present invention, may be a hydrophilic (also called polar) or a hydrophobic (also called non polar). The classification of "hydrophilic" and of "hydrophobic" polymers according to the present invention is defined on the basis of a calculated "Hydrophilic Index" "HI" as defined below, in the experimental part. Generally, we will consider as "hydrophilic polymers" polymers with calculated HI higher than 15 (expressed in g/l).

Consequently to this distinction of the said polymers to "hydrophilic or "hydrophobic", preferably the said acid b) may be used in the following way depending on the said hydrophilic character (see below in the experimental part the corresponding definition) of the polymer in the said dispersion a) :

i) when the said polymer is a hydrophilic polymer, with HI of at least 10 g/l, preferably of at least 15 g/l, then the said organic acid is selected from mixtures of $C_1$-$C_4$ with $C_{16}$ to $C_{25}$, and

ii) when the said polymer is a hydrophobic polymer with HI of less than 15 g/l, preferably of less than 10 g/l, then the said organic acid is selected from $C_{16}$ to $C_{25}$.

In the first case, where the said polymer is a hydrophilic one (or also defined as polar one), the said acid b) is a mixture of at least one $C_1$ to $C_4$ acid with at least one $C_{16}$ to $C_{25}$ acid, the latter preferably bearing at least one ethylenic unsaturation, if an intermediate effect and higher compatibility is preferably targeted. Particularly, $C_{16}$ to $C_{25}$ acids are preferred if a permanent plasticizing effect is preferably targeted for coatings, including food coatings, for example cheese coatings, more particularly hard cheese coatings, or paints, varnishes, inks, or for aqueous adhesives or glue compositions particulary for packaging application or for construction chemical compositions or for treatment compositions (fiber sizing, leather or textile treatment). Usually, in packaging applications, VAM (vinyl acetate) homopolymers stabilized with hydrolyzed polyvinyl acetate are frequently formulated with phthalate derivative plasticizers with amounts from 15 to 25%. In this particular case, the carboxylic acids as defined according to the invention with an amount from 5 to 20% can successfully replace the said phthalate plasticizers, without the known disadvantages related with the use of phthalates.

For adhesive applications and for use in high Tg polymers applications (Tg > 20°C or MFFT > 25°C) the content of acid b) (weight ratio with respect to the aqueous dispersion a)) preferably may vary from 5 to 30%, more preferably from 10 to 20%. For other coatings applications with lower polymeric Tg (Tg < 20°C or MFFT < 25°C), such as in protective coatings or in paints, varnishes or inks and more particularly in food coatings more preferably in cheese (including hard cheese) coatings or in sausage coatings, the said acid b) content preferably varies from 0.05 to 10% and more preferably from 0.1 to 10% and even more preferably from 0.1 to 5%, the said content depending on the initial Tg or MFFT of the said polymer (referred Tg or MFFT being without acid b)).

In the second case, where the said polymer is a hydrophobic one (also said non-polar), the said acid b) is selected from $C_{16}$ to $C_{25}$ monocarboxylic or dicarboxylic acids. The corresponding compositions are particularly suitable for protective coatings compositions including paints, varnishes, inks, or food coatings compositions including food removable or peelable coatings compositions, preferably cheese (including hard cheese) coatings compositions or packaging compositions, or construction chemical compositions, or adhesive or glue compositions, or treatment compositions (fiber sizing, leather or textile treatment) having enhanced hydrophobic character and controlled specific mechanical properties.

The said polymer of the aqueous dispersion a) may be either vinylic homopolymers and/or copolymers or acrylic homopolymers and/or copolymers. More specifically, the said vinylic homopolymers are homopolymers of vinyl esters, preferably vinyl esters derived from the reaction of vinyl alcohol with $C_2$ to $C_{12}$ monocarboxylic acids, such as vinyl acetate or vinyl propionate or vinyl butyrate or vinyl versatate, and the said copolymers are copolymers of these vinyl esters with at least one of the following comonomers : ethylene, maleic or fumaric acid or esters of maleic or fumaric acid (maleates or fumarates) with $C_1$ to $C_{12}$ monoalcohols, or with acrylic comonomers, this term meaning both the acrylates and the methacrylates comonomers. As it concerns the said acrylic homopolymers and/or copolymers, they are homopolymers and/or copolymers of acrylic esters, preferably $C_1$ to $C_{18}$, more preferably $C_1$ to $C_{12}$ alkyl acrylates, this term, meaning both acrylates and methacrylates, and their copolymers are those with styrene and/or vinyl esters, as defined above.

The said polymer is considered to be a hydrophilic polymer when the Hydrophilic Index HI as defined below in the description is higher than 15 g/l. Suitable hydrophilic polymers may include among others : vinyl acetate homopolymers and/or vinyl acetate copolymers having predominant vinyl acetate content (meaning "vinyl acetate content" > 50% w/w on the total monomer weight). Hydrophobic copolymers of vinyl acetate have less than 25% preferably less than 20% of vinyl acetate.

The aqueous polymeric dispersion a) according to the invention is obtainable by emulsion polymerisation of a monomeric composition comprising at least one ethylenically unsaturated monomer, these monomers being the precursors of the polymeric structure as defined above. The said ethylenically unsaturated monomer may be at least one of the monomers and/or comonomers as mentioned above and/or at least one of the following ones :

- (meth)acrylic acid esters of $C_1$ to $C_{18}$ monoalcohols, such as 2-ethylhexyl (meth)acrylate, butyl (meth)acrylate, ethyl(meth)acrylate, or
- (meth)acrylate diesters or monoesters of $C_2$ to $C_6$ diols, corresponding to hydroxy $(C_2-C_6)$ alkyl (meth)acrylates, or
- urethane acrylates or epoxy acrylates or polyester or polyether acrylates,
- functional monomers such as : (meth)acrylic acid or anhydride, (meth)acrylamide, glycidyl (meth)acrylate, N-methylol (meth)acrylamide, allyl (meth)acrylate, acetoacetoxy ethyl (meth)acrylate, diacetone acrylamide, diacetone (meth)acrylate, (meth)acrylonitrile, itaconic acid or anhydride, maleic acid or anhydride, fumaric acid, vinyl glycidyl ether,
- vinyl alcohol esters, such as vinyl acetate, vinyl versatate, vinyl propionate, vinyl butyrate, and vinyl acetoacetate, allyl acetoacetate,
- vinyl aromatic monomers such as styrene,
- olefins such as ethylene,
- maleates and/or fumarates esters or diesters of $C_1-C_{12}$, preferably of $C_2$ to $C_{10}$ alcohols, in particular dialkyl maleates esters in $C_1-C_{12}$, preferably $C_2-C_{10}$, such as di-butyl maleates and/or fumarates.

The said aqueous polymeric dispersion is stabilized with at least one surfactant, selected from anionic and/or non-ionic surfactants and may be further stabilized with either one protective colloid around the polymeric particles, selected from : partly or completely hydrolyzed polyvinyl acetate, also called polyvinyl alcohol or cellulose derivatives type.

A second subject matter of the present invention concerns a process for preparing the said aqueous dispersion of the invention.

The said process comprises at least the following essential steps :

i) preparing an aqueous polymeric dispersion a) as defined above according to the invention, either by emulsion polymerisation or by dispersing in water a preformed polymer ,
ii) adding in the said aqueous polymeric dispersion at least one organic carboxylic acid b) as defined above according to the invention and when (if) the said acid is under solid state at room temperature ; then, heating it to a liquid state before adding it at the same temperature to the preheated aqueous dispersion a), and optionally, previous to adding it, diluting it in water,

iii) mixing aqueous dispersion a) and acid b) to obtain an homogeneous aqueous dispersion,

iv) adjusting the pH of the said aqueous dispersion to favour the acid form of the said carboxylic acid b).

Another subject matter of the invention is an end-use composition comprising at least one aqueous polymeric dispersion as defined above according to the invention, or as obtainable by the above-defined process of preparation according to the present invention. "End-use composition" is meaning "applicative composition or formulation for end-use in specific applications". The said end-use composition may be an aqueous coating composition such as an aqueous paint or varnish or ink or it may be an aqueous glue or adhesive composition (formulation) particularly for wood or it may be a fibre (such as glass fibre) sizing composition or a leather treatment composition or a textile (woven or non-woven fibres) treatment composition or a protective food coating composition or a construction chemical composition, such as concrete, mortar, sealant or waterproofing composition.

According to a specific embodiment of the end-use composition, the invention comprises an aqueous dispersion a) as defined according to the invention, with an acid b) selected from at least one of : formic acid or acetic acid or propanoic acid or lactic acid. Such an end-use composition is more particularly suitable for an aqueous adhesive or glue compositions for wood or for food protective coatings, more particularly food protective coatings, preferably for cheese (including hard cheese) coatings or sausage coatings. In this case, the polymer of the said polymeric aqueous dispersion a) is preferably a hydrophilic (polar) polymer which is defined as such by a hydrophilic index HI (see the definition below) of at least 10, preferably at least 15 g/l. In the case of protective coatings, for both industrial coatings and food coatings application, more particularly for cheese coatings, as suitable aqueous polymeric dispersion according to the invention may be chosen a polymeric dispersion containing in the said dispersion a), a hydrophilic polymer selected from VAM copolymers, preferably from copolymers of VAM with maleate and/or fumarate esters of $C_1$ to $C_{12}$ alcohols, and an acid b) selected from $C_1$-$C_{25}$ acids, or from their mixtures with $C_1$-$C_4$ acids. Particularly for food coatings and more particularly for cheese coatings, the said acids b) are selected from $C_{16-25}$ acids or their mixtures. They are preferably ethylenically unsaturated with at least one ethylenic unsaturation.

For the said food coatings application, the weight ratio of the acid b) with respect to the polymer of the said dispersion a) is preferably from 0.1 to 5%.

More preferably for removable or peelable protective coatings, either industrial coatings (paints , inks, varnishes, packaging coatings) or food coatings such as cheese coatings, the aqueous polymeric dispersion contains an acid b), selected from $C_{16}$-$C_{25}$ acids or from their mixtures with $C_1$-$C_4$ acids. More particularly in food coatings and more specifically in cheese coatings, preferred suitable dispersions are copolymers of vinyl acetate and maleates or fumarates, preferably $C_1$ to $C_{12}$ dialkyl maleates or fumarates, more particularly di-butyl maleate in proportion vinyl acetate/maleate from 75/25 to 55/45, the dispersion being stabilized with both a surfactant as well as with protective colloids, such as polyvinyl alcohols or cellulose derivatives such as cellulosic ethers, polymerized in emulsion with a polymeric Tg from 25 to 5°C, MFFT from 15 to 5°C. These copolymers are generally formulated with food-suitable dyes or pigments, thickeners, pH regulators and anti-mycotic agents such as natamycin, redox stabilizers and other current food additives as well-known by a man skilled in the art of food coatings compositions. Some of the suitable additives for food coating compositions are illustrated in CA 2463199 (page 8, line 31 to page 9, line 17).

According to another particular embodiment of the present invention, the said end-use composition comprises an aqueous dispersion, as defined above according to the invention, comprises an organic carboxylic acid b) selected from $C_{16}$ to $C_{25}$ acids or their mixtures with $C_1$-$C_4$ acids as defined above. The said end-use composition is more particularly and preferably a packaging adhesive composition or a protective coating composition, including removable or peelable protective coating compositions, more specifically in food applications such as in food coatings such as cheese coatings, or packagings or in temporary protection of specific substrates. The term "removable" or "peealable" should be considered as meaning "removable with low to very low solicitation force", which means that the coating has a controlled and relatively low enough adhesion and tack to the coated substrate, so that by simple hand-tearing and pulling force applied on the coating, the said coating is peeled off. More specifically, peelable or removable coatings, particularly protective coatings (industrial coatings such as paints, inks or varnishes and food coatings such as cheese coatings) can be obtained with specific coating compositions comprising an aqueous dispersion a) as defined above containing an acid b) selected from $C_{16}$ to $C_{25}$ acids or their mixtures with $C_1$-$C_4$ acids as defined above. Food coating compositions and more particularly cheese coating compositions are a more specific case of these coating compositions. Cheese coatings, particularly hard cheese coatings obtained with such a coating composition, particularly enable the resulting coating to have: an improved peel off property, a reduction of crackling tendency, without significant tendency for tack. This is particularly valid for acids b) selected from fatty acids in $C_{16}$ to $C_{25}$ (such as linoleic acid or oleic acid and other isomers or preferred acids $C_{16}$-$C_{25}$ as defined above) and/or their mixtures with $C_1$-$C_4$ acids (such as acetic acid). In this case, the aqueous polymer dispersion a) is preferably as defined specifically for food coatings and more preferably for cheese coatings, in the preceding paragraphs. Consequently, the use of an acid b) selected from $C_{16}$-$C_{25}$ added in a polymer dispersion a) such as defined according to the invention, does improve the peelability of the coating resulting from the application of the resulting polymeric dispersion to a substrate and drying of the coating. This is particularly of interest in both industrial protective coatings, such as paints, inks, varnishes as well as for food coating applications such as in cheese coatings.

So, it is an additional subject of the present invention, a method for improving the peelability of an industrial protective coating or of a food protective coating as applied to a solid substrate, the said coating resulting from applying to a substrate and drying of an aqueous polymeric dispersion as defined according to the present invention, where, the said method comprises the steps of adding and mixing with the said polymeric dispersion a) as defined above, an organic acid b) selected from $C_9$-$C_{25}$ acids, preferably from $C_{16}$-$C_{25}$ acids and then drying the applied coating on the substrate.

Another subject-matter of the invention is the use of at least one aqueous dispersion as defined above, according to the invention, in end-use compositions, more particularly in aqueous coatings compositions selected from paints, varnishes, inks, or for use in aqueous glues or adhesive compositions, particularly for wood, or in construction chemical compositions, such as concrete, mortar, sealant or waterproofmg compositions or in fibre sizing compositions or in textile or in leather treatment compositions, or in food (protective) coatings, more particularly in cheese or sausage coatings or in packagings, particularly food packagings or in temporary protection of specific substrates.

More particularly, when the organic carboxylic acid b) is selected from formic acid or acetic acid or propanoic acid or lactic acid, the most suitable use is in aqueous adhesives or glue compositions for wood and in food coating compositions, while when it is selected from $C_{16}$ to $C_{25}$ acids, the most suitable use is either in packaging adhesives including for food packaging or in protective coatings, including removable protective coatings either for food coatings or packaging or for specific substrate temporary (provisional) protection, to prevent oxidizing contact with air or to prevent exposure to light.

A final subject-matter of the present invention is coated or treated substrates resulting from the application and filmification of at least one layer of at least one end-use composition, including aqueous coating or adhesive or glue or other treatment compositions as defined above according to the present invention, on a substrate, more particularly on substrates selected from wood, metal, plastic, paper, cardboard, glass, concrete, leather, textile fibres (including woven and non-woven), or natural or synthetic fibres or food, such as cheeses, sausages, fruits. More specifically, a removable protective coating is part of the present invention, as resulting from the application and filmification of at least one layer of at least one end-use protective coating composition of the present invention, comprising at least one polymer dispersion as defined according to the present invention, and comprising $C_{16}$-$C_{25}$ acids b) more preferably these acids bearing at least one ethylenic unsaturation, or optionally mixtures of $C_1$ to $C_4$ with $C_{16}$-$C_{25}$ acids b) bearing at least one ethylenic unsaturation.

The following examples can illustrate the present invention and its performances.

EXPERIMENTAL

Preparation and characterization of the aqueous polymeric dispersions :

• Addition conditions and compatibility test of the acid b) : with the aqueous dispersion a) and with the polymer on which it is based

The acid must be chosen in order to be compatible with the polymer in the liquid state and with the dispersion a). "Compatible with the dispersion a)" means that when added with acid b), the said dispersion a) must be stable in terms of viscosity evolution in time, showing no grits (according to n° standard method ISO 4576), no demixing, which means neither viscosity evolution in time nor flocculation. "Compatible with the polymer" means that when filmified in the solid dry state, the polymer film as obtained after drying, is homogeneous and showing no visual defects. In fact, it has the same aspect as the initial starting polymer without acid addition.

Liquid acids, more particularly short chain acids as $C_1$-$C_8$ acids, are slowly added in lattices (dispersion a)), under stirring, to avoid flocculation phenomena in the dispersion, sensitive to acid strength. In such a case, they may be diluted in water before adding in dispersion a).

For the addition of acids under powder form, it is easier to heat the dispersion a), at around 60°C, prior to the acid incorporation under stirring. In alternative, solid acids, like decanoic acid, must be heated at a temperature higher than their melting point before being incorporated in the pre-heated dispersion a). If the dispersion a) is too much sensitive to acid strength, it can be previously diluted in water.

• pH

The measures have been carried out following the ISO 976 method.

• Solids content

According to ISO 3251 method.

• Viscosity

According to ISO 2555 method.

Characterization of the polymeric films :

The coalescing and plasticizing effects of the different acids b) are tested in polymer dispersions a), based on different polymer compositions, by measuring the minimum film-forming temperature (MFFT), glass transition temperature (Tg) and mechanical properties (tensile strength and elongation at break) corresponding to the related formulations.

• Differential Scanning Calorimetry (DSC)

The samples from the dispersions are dried in an air-conditioned room (23°C/50% of relative humidity RH) to evaporate the volatile contents. The Tg measurements are made on a DSC7 device (from Perkin Elmer) using a heating rate of 10°C/min with two consecutive scans from - 40 to 120°C. The first scan allows to eliminate the residual solvent, the relaxation and the physical ageing of the polymer, the related Tg values being determined from the second scan.

• Minimum Film Forming Temperature (MFFT)

The measures have been carried out following the ISO 2115 method.

• Tensile strength and elongation at break

Tested specimen have been prepared according to the DIN 53448B method from the original dispersions. They are dried in an air-conditioned room (23°C/50% RH) to evaporate the volatile contents. Films are around 1000 $\mu$m thick and punched specimens have useful dimensions of 5x30 mm. Tensile strength and elongation at break are measured with a dynamometer Zwick Z020 equipped with a 200N cell in an air-conditioned room (23°C/50% RH) at 50 mm/min. Exact thickness of each sample is taken into account for calculations.

Organic carboxylic acids b) in various polymeric dispersions a), and Hydrophilic character (Index) of the corresponding polymer

In order to have an effect on decreasing the MFFT, the acid must be chosen with respect to its hydrophilic character, taking into account the hydrophilic character of the polymer. Short carbon chain acids are the most hydrophilic and long carbon chain acids are the most hydrophobic.

In consequence, short chain acids are more efficient to decrease the MFFT of hydrophilic polymers (also called polar polymers) while long chain acids are more efficient to decrease the MFFT of hydrophobic polymers (see below the definition according to the invention).

Mixtures of different acids can be used to increase compatibility with the polymer, and thus the coalescing and plastification efficiency. The hydrophilic character of a polymer may be correlated with the solubility in water of its monomeric components. A "hydrophilic index" HI can thus be determined depending on the monomer composition and on the water solubility of each one of the monomeric components, using the below reported formula (for a copolymer of two monomers $M_1$ and $M_2$, but can be extrapolated to more than two monomers on the same principle of a calculated weight average monomeric solubility from known individual monomeric solubilities). Monomeric concentrations, lower than 2.5% by weight have not been considered. Hydrophilic Index

$$\text{Hydrophilic Index HI} = x1 \ast s1 + x2 \ast s2,$$

with :

$x_1$, $x_2$ : weight fraction of respective $M_1$ and $M_2$ monomers in the monomeric composition $M_1 + M_2$
$s_1$, $s_2$ : solubilities at 25°C in g/l of respective monomers $M_1$ and $M_2$

Monomeric water solubility $s_i$ for a monomer $M_i$ is expressed in g/l at 25°C according to REGISTRY DATA BASE provided on line by CAS (Chemical Abstracts Series) and available on STN HOST, with calculated solubility values (g/l at 25°C) by ACD/labs Software V8.14, according to the provider.

Consequently, we may consider as "hydrophilic" (also called "polar") polymers, those with calculated HI of at least 15 g/l at 25°C and as "hydrophobic" (non polar) those with lower than 15 g/l, on the base of individual water solubilities as shown for example in Table 1 below.

Table 1 :

| ACN | VAM | MA | MMA | EA | GMA | EMA | BA | BMA | STY | DBM | 2EHA | DOM |
|---|---|---|---|---|---|---|---|---|---|---|---|---|
| 99,2 | 50 | 46 | 15 | 15 | 12 | 5,1 | 1,8 | 0,64 | 0,39 | 0,16 | 0,048 | 0,00068 |
| ACN : acrylonitrile, VAM : vinyl acetate, MMA : methyl methacrylate, GMA : glycidyl methacrylate, MA : methyl acrylate, EA : ethyl acrylate, EMA : ethyl methacrylate, BA : butyl acrylate, BMA : butyl methacrylate, STY : styrene, DBM : dibutyl maleate, 2EHA : 2- ethyl hexyl acrylate, DOM : di n-octyl maleate. | | | | | | | | | | | | |

Tables 2 and 3 below show the examined various polymeric dispersions a) with their corresponding HI and other characteristics (Table 2) and the added acids b) and their effect on MFFT (Table 3).

Table 2 :

| Polymer Dispersion a)* | Monomeric Composition | Stabilisation | pH | Solids content (%) | Viscosity (mPa.s) | Tg (°C) | MFFT (°C) | Calculated Hydrophilic Index HI (g/l) |
|---|---|---|---|---|---|---|---|---|
| Craymul 1309 | 100% VAM (vinyl acetate) | HEC | 4,5 | 54 | 2000 | 37 | 15 | 50 |
| Craymul 1345 S | 80% VAM 20% MMA (methyl methacrylate) | A / NI | 4,0 | 45 | 50 | 36 | 25 | 43 |
| Craymul 4374 | 76% VAM 24% DBM (di-n-butyl maleate) | PVOH | 4,5 | 57 | 8000 | 23 | 13 | 38 |
| Craymul 2741 | 50% MMA 50% BA (butyl acrylate) | A / NI | 8,5 | 46 | 50 | 24 | 19 | 8,4 |
| Craymul 2423 | 50% STY (styrene) 50% BA | A / NI | 8,0 | 50 | 10000 | 18 | 20 | 1,1 |
| Craymul 5432 | 65% STY 35% 2-EHA | A / NI | 7.0 | 50 | 3000 | 33 | 36 | 0.27 |
| *All Craymul aqueous dispersions are supplied by Cray Valley | | | | | | | | |

Table 3 :

| Polymer dispersion a) | MFFT of Polymer dispersion a) (°C) | Acid post-addition (w/w % with respect to total a)+b)) | Final pH of measurement | pKa of acid b) | MFFT (°C Mixture (a)+b)) |
|---|---|---|---|---|---|
| Craymul 1309 | 15 | 2% formic acid | 2.3 | 3.75 | 10 |

(continued)

| Polymer dispersion a) | MFFT of Polymer dispersion a) (°C) | Acid post-addition (w/w % with respect to total a)+b)) | Final pH of measurement | pKa of acid b) | MFFT (°C Mixture (a)+b)) |
|---|---|---|---|---|---|
| Craymul 1345S | 25 | 1% acetic acid | 3.5 | 4.76 | 18 |
| | | 2% acetic acid | 2.9 | 4.76 | 13 |
| | | 2% octanoic acid | 3.8 | 4.89 | 10 |
| | | 2% oleic acid | 3.8 | 5.02 | 25 |
| | | 1% acetic acid + 1% oleic acid | 3.4 | 4.76/5.02 | 14 |
| Craymul 4374 | 13 | 2% acetic acid | 3.8 | 4.76 | 2,5 |
| | | 2% octanoic acid | 4.7 | 4.89 | 1 |
| | | 2% oleic acid | 4.7 | 5.02 | 7 |
| Craymul 2741 | 19 | 2% formic acid | 2.8 | 3.75 | 12 |
| | | 2% oleic acid | 6.9 | 5.02 | 9 |
| Craymul 2423 | 20 | 1% acetic acid | 4.6 | 4.76 | 20 |
| | | 2% acetic acid | 4.3 | 4.76 | 20 |
| | | 2% octanoic acid | 6.6 | 4.89 | 0 |
| | | 2% oleic acid | 7.2 | 5.02 | 13 |
| Craymul 5432 | 36 | 2% acetic acid | 4.3 | 4.76 | 34.5 |
| | | 5% acetic acid | 3.9 | 4.76 | 32 |
| | | 2% octanoic acid | 6.5 | 4.89 | 23 |
| | | 5% octanoic acid | 6.3 | 4.89 | 8 |
| | | 2% oleic acid | 6.8 | 5.02 | 27 |
| | | 5% oleic acid | 6.4 | 5.02 | 13 |

Effect of the acid b) on MFFT, Tg and mechanical performances :

Short chain acids up to $C_8$ are considered to act as latent volatile organic compounds (VOC) because of their boiling point lower than 250°C. This category of acids should evaporate from the film and will decrease the MFFT enabling improved (easy) filmification, but the proper Tg of the polymer will finally recover after the evaporation (of the said acid), which is Tg value of the pure polymer without any plasticizing agent. Thus, the final Tg and global mechanical performances in the final coating are not affected by the said acid, given its latent and effective final evaporation (elimination). It can be said that short chain acids (in $C_1$-$C_8$) are acting as coalescing agents with a temporary plasticizing effect.

Acids with chain from $C_9$ and higher will have a higher tendency to remain in the film, so that the MFFT will be decreased but also the Tg will be permanently decreased, more or less depending on the acid used : they act as permanent plasticizers. Table 4 below shows the comparative effects of oleic acid, representing $C_9$-$C_{25}$ range, with respect to acetic and octanoic acids, for $C_1$-$C_8$ range.

Table 4 :

| Polymer dispersion a) | Acid post-addition (% w/w vs a)+b)) | Immediately | | | After ageing 1 week at 60°C | | |
|---|---|---|---|---|---|---|---|
| | | Tg (°C) | Tensile strength (MPa) | Elongation at break (%) | Tg (°C) | Tensile strength (MPa) | Elongation at break (%) |
| Craymul 4374 | none | 23 | 13,8 | 310 | 24 | 14 | 255 |
| | 2% acetic acid | 15 | 4,5 | 485 | 20 | 11 | 305 |
| | 2% octanoic acid | 17 | 5,5 | 570 | 17 | 7 | 405 |
| | 2% oleic acid | 20 | 11 | 395 | 20 | 12,0 | 355 |

Coalescing and plasticizing effect and pH variation :

The acid function is deemed to be responsible of the plasticizing effect, so the pH must be lower than the pKa of the acid, in order to keep the said function under its acid form and consequently resulting in plasticizing effect. This is particularly valid for short chain acids.

In the case of long chain acids, the hydrocarbon chain may contribute also to the plasticizing effect.

Comparative results are shown in Table 5, for acetic acid and oleic acid when varying the pH, by adjusting with aqueous NaOH.

Table 5 :

| Polymer dispersion a) | Polymer dispersion a) MFFT (°C) | Acid post-addition (% w/w) | pH (as adjusted with aqueous NaOH*) | Mixture (a)+b)) MFFT (°C) |
|---|---|---|---|---|
| Craymul 4374 | 12 | 2% acetic acid | 3,0 | 3 |
| | | 2% acetic acid | 4,4* | 10 |
| | | 2% acetic acid | 5,3* | 12 |
| | | 3,8% sodium acetate | 5,3* | 12 |
| | | 2% oleic acid | 4.7 | 7 |
| | | 2% oleic acid | 6,1* | 9 |
| | | No acid | 4.5 | 13 |

Finished poly vinylacetate-based wood adhesives and characteristics :

In general, for wood adhesive application where water resistance is required, dispersions of vinyl acetate and N-methylol acrylamide are used. These copolymers containing only a small amount of N-methylol acrylamide around 1% are polymerized in emulsion in presence of surfactant and polyvinyl alcohol as protective colloid. The obtained copolymers are considered as hydrophilic and have a HI index over 15 g/l and generally have a Tg of around 35°C and a MFFT of around 15°C. MFFT is usually decreased to a temperature lower than 10°C to improve the film formation at low temperatures, by adding a coalescing agent, a commonly used being butyl diglycol acetate (BDGA). Aluminium salts are also added during the formulation of these copolymers (2% aluminium chloride is typical) to act as physical crosslinking agent between hydroxyl groups and so to increase the water resistance.

In a typical dispersion as described above, tests were done by replacing partially and totally butyl diglycol acetate by acetic acid.

Table 6 : wood-adhesive compositions

| | Coalescing agent | Weight % | MFFT (°C) | D3-3 (N/mm$^2$) | Creep test (%) | Watt 91 (N/mm$^2$) |
|---|---|---|---|---|---|---|
| A : typical formulation | BDGA | 2,3 | 6 | 2.1 | 30 | 6.5 |

(continued)

|  | Coalescing agent | Weight % | MFFT (°C) | D3-3 (N/mm$^2$) | Creep test (%) | Watt 91 (N/mm$^2$) |
|---|---|---|---|---|---|---|
| B : formulation according to the invention with partial replacement of BDGA by acetic acid | BDGA / CH$_3$COOH 50/50 | 2,3 | 6 | 2,8 | 100 | 7.2 |
| C : formulation according to the invention by totally replacing BDGA by acetic acid | CH$_3$COOH | 2,3 | 6 | 2.8 | 100 | 7.3 |

Description of the tests used :

• D3-3 water resistance test

The measures have been carried out following the EN 204 classification. Adhesive joints are obtained by gluing two beech wood specimens with a pneumatic press as reported in EN 205. A tensile strength > 2 N/mm$^2$ is required to pass the test.

• WATT 91 : Wood Adhesive Temperature Test

This test allows to obtain the resistance to heat of non structural adhesive joints and it is described in standard EN 14257. The test is carried out on standard specimens kept for one hour at 80°C and immediately tested for tensile strength. The test is passed if tensile strength is > 7 N/mm$^2$.

• Creep Test

The measures have been carried out following the MU 700 : 85 method.
This test gives an indication of the resistance of a non-structural adhesive joint to static loads. The test is passed if at least 80% of the specimens resist to load after 21 days.

Conclusion on comparative results of Table 6 :

In order to decrease their MFFT, wood glues generally contain a coalescing agent.
Following the invention, the partial or total replacement of butyl diglycol acetate by acetic acid allows to have identical MFFT and due to the higher volatility of acetic acid, an increase of mechanical performances is observed. This recovery of the intrinsic performances of the polymer allows to pass well over D3-3, creep resistance and Watt 91 tests for wood glues.

Effect of the presence of an organic acid b) in the aqueous polymeric dispersion

a) as defined according to the invention, on the performances of cheese coatings

A cheese coating composition was prepared by adding in the aqueous dispersion Craymul 4378 (copolymer VAM/DBM 65/35) water for adjusting viscosity and the organic acid b) and mixing the components. The following table 7 shows the resulting compositions as tested for cheese coating.

Table 7 : tested cheese coating compositions

| Polymer dispersion a) | Acid post-addition b) (w/w with respect to total a)+b)) | Temperature (°C) | pH | Dry Solids (%) | Viscosity* [mPas] |
|---|---|---|---|---|---|
| Craymul 4378 | No | 21.5 | 4.44 | 39.7 | 3420 |
| Craymul 4378 | 0.5% acetic acid | 21.5 | 4.14 | 39.9 | 2840 |
| Craymul 4378 | 2% acetic acid | 21.5 | 3.31 | 39.9 | 3860 |
| Craymul 4378 | 1% linoleic acid | 21.5 | 4.26 | 39.8 | 3180 |

(continued)

| Polymer dispersion a) | Acid post-addition b) (w/w with respect to total a)+b)) | Temperature (°C) | pH | Dry Solids (%) | Viscosity* [mPas] |
|---|---|---|---|---|---|
| Craymul 4378 | 2% linoleic acid | 21.5 | 4.22 | 40.0 | 2960 |
| Craymul 4378 | 1% linoleic acid + 1% acetic acid | 21.5 | 3.37 | 39.5 | 3360 |
| * Viscosity measurement according to DIN EN ISO 2555, Brookfield LVDV-E, spindle 4, 30 rpm | | | | | |

Dutch cylindrical cheeses, type Gouda 48+, produced by Frico Cheese (Gerkesklooster, the Netherlands) with a nominal weight of 4.5 kg were coated with cheese coating. Specifically, in case of the examples, 3 days after the cheeses were produced and a few hours after the cheeses came out of the brine bath, they were placed on wooden shelves, and the top half was coated by manual application using a sponge. The coating was allowed to dry, the cheeses were turned and the coating procedure was repeated until the cheeses reached the age of 29 days. More precisely, the following schedule was employed : at the age of 3, 4, 7, 10, 14, 16, 18, 21, 23, 25 and 29 days the cheeses were turned and coated. The total amount of coating ranged between 15 and 5 g depending on the age of the cheese. The cheeses were stored at a temperature of 13°C and a humidity of 83%.

Cheese coating properties were assessed at the age of 13 days after production. Peel off properties were assessed at the age of 29 days.

The following Table 8 summarises the cheese coating properties of the cheeses treated with the different coating compositions, as mentioned in the previous table. The cheese coating properties are assessed according to the following score card :

0   = not present
1   = slightly present
2   = present
3   = significantly present
4   = strongly present

Table 8 : cheese coatings performances

| Coating composition reference a | Tack | | Crackling d | Gloss e | Peel off f |
|---|---|---|---|---|---|
| | To shelve b | Upon piling c | under stress | | |
| 4378 none added | 1 | 2 | 4 | 4 | 0 |
| 4378+0.5% HAc | 1 | 2 | 4 | 4 | 0 |
| 4378+2% HAc | 2 | 2 | 4 | 4 | 0 |
| 4378+1% LA | 2 | 2 | 0 | 4 | 3 |
| 4378+2% LA | 2 | 3 | 0 | 4 | 4 |
| 4378+1% LA+1% HAc | 2 | 2 | 1 | 4 | 3 |

a) 4378 = Craymul 4378, HAc = acetic acid, LA = linoleic acid
b) Tack to shelve is defined as the extent of adhesion of a cheese to the wooden shelve, and evaluated by a person skilled in the art.
c) Tack upon piling is defined as the extent of cheeses to adhere to each other upon piling four cheeses on top of each other for 5 hours at storage house conditions and evaluated by a person skilled in the art.
d) Crackling under stress is defined as the extent of crackling of the coating upon pushing with a thumb into the coated cheese, as evaluated by a person skilled in the art.
e) Gloss is visually observed and evaluated by a person skilled in the art.
f) Peel off is defined as the ability of the coating to be peeled off from the cheese after making a cross-mark in the coated cheese and peeling the coating off.

Peel off score card :

0 = no peel off

1 = 0 to 2 cm$^2$

2 = 2-10 cm$^2$

3 = 10 to 50 cm$^2$

4 = > 50 cm$^2$

Clearly, the food coating according to the invention shows reduction of crackling tendency and improvement of peel off properties without significantly increasing the tendency for tack. This is particularly valid for acids b) selected from fatty acids in $C_9$-$C_{25}$ and more preferably from $C_{16}$ to $C_{25}$, such as tested linoleic acid or oleic acid and isomers and/or their mixtures with $C_1$-$C_4$ acids, such as acetic acid.

**Claims**

1.    An aqueous polymeric dispersion, **characterized in that** :

- it comprises :

a) at least one polymer in aqueous dispersion, having a minimum film-forming temperature (MFFT; measured according to the ISO 2115 method) between 0 and 100°C,
b) from 0.05 to 30%, preferably from 0.1 to 30% by weight with respect to the said aqueous dispersion a), of at least one organic carboxylic acid selected from $C_{16}$ to $C_{25}$ acids or from their mixtures with $C_1$-$C_4$ acids,

- the said organic carboxylic acid b) and its content in the said aqueous dispersion is selected to be compatible with the said aqueous polymeric dispersion a) as such, and with the said polymer, as polymer itself,
- the said acid b) is present in its acid form with the pH (measured according to the ISO 976 method) of the said aqueous dispersion a) being adjusted to be lower than the pKa of the said organic carboxylic acid,

and **in that**

- the said dispersion a) has a solids content (measured according to the ISO 3251 method) from 25 to 70%, preferably from 35 to 70% w/w,
- the weight ratio of the acid b) with respect to the said polymer is not exceeding 50%.

2.    Aqueous dispersion according to claim 1, **characterized in that** the said organic carboxylic acid is present at 0.05 to 15%, preferably from 0.1 to 10%, more preferably from 0.1 to 5% by weight with respect to the said aqueous dispersion a).

3.    Aqueous dispersion according to claim 2, **characterized in that** the MFFT of the said polymer is at most 25°C.

4.    Aqueous dispersion according to claim 1, **characterized in that** the said organic carboxylic acid is present at 5 to 30%, preferably 10 to 20% by weight with respect to the said aqueous dispersion a) and **in that** the MFFT of the said polymer in aqueous dispersion is higher than 25°C, preferably from 30 to 70°C.

5.    Aqueous dispersion according to any one of claims 1 to 4, **characterized in that**:

i) when the said polymer is a hydrophilic polymer, with HI of at least 10 g/l, preferably at least 15 g/l, then the said organic acid is selected from $C_{16}$ to $C_{25}$ or from mixtures of $C_1$-$C_4$ with $C_{16}$ to $C_{25}$ and
ii) when the said polymer is a hydrophobic polymer with HI of less than 15 g/l, preferably less than 10 g/l, then the said organic acid is selected from $C_{16}$ to $C_{25}$.

6.    Aqueous dispersion according to any one of claims 1 to 5, **characterized in that** the said organic carboxylic acid is selected from $C_{16}$ to $C_{25}$ acids and **in that** the said organic carboxylic acid bears at least one ethylenic unsaturation.

7.    Aqueous dispersion according to any one of claims 1 to 4 or 5, **characterized in that** the said polymer is a hydrophilic polymer with HI of at least 15 g/l and the said organic carboxylic acid is selected from a binary or ternary mixture of

a $C_1$ to $C_4$ acid with a $C_{16}$ to $C_{25}$ acid, the latter bearing at least one ethylenic unsaturation.

8. Aqueous dispersion according to claims 6 or 7, **characterized in that** the weight ratio of the said acid is from 0.05 to 5% preferably from 0.1 to 5% by weight with respect to the said dispersion a).

9. Aqueous dispersion according to any one of claims 1 to 8, **characterized in that** the said polymer is based on either homopolymers of acrylic monomers and/or on copolymers of only acrylic monomers or on styrene-acrylic copolymers or on purely vinyl ester (vinyl alcohol esters) homopolymers and/or copolymers.

10. Aqueous dispersion according to any one of claims 1 to 9, **characterized in that** the said polymer is at least one of the homopolymers of vinyl esters selected from vinyl acetate or vinyl propionate or vinyl butyrate or vinyl versatate and/or at least one copolymer of the same vinyl esters with at least one from:

    maleate comonomers or acrylic comonomers or ethylene.

11. Aqueous dispersion according to claim 7, **characterized in that** the said aqueous polymeric dispersion a) is stabilized with either one protective colloid, selected from : partly or completely hydrolyzed polyvinyl acetate (polyvinyl alcohol), cellulose derivatives and/or with at least one surfactant selected from anionic and/or non-ionic surfactants.

12. Aqueous dispersion according to claim 7, **characterized in that** the said polymer is hydrophilic with HI of at least 15 g/l and selected from vinyl acetate homopolymers and/or from vinyl acetate copolymers with predominant vinyl acetate content or from acrylic homopolymers and/or copolymers.

13. Aqueous dispersion according to any one of claims 1 to 3, **characterized in that** the polymer of the said dispersion a) is hydrophilic and selected from vinyl acetate (VAM) copolymers, preferably copolymers with maleate and/or fumarate esters of $C_1$ to $C_{12}$ alcohols, and **in that** the said acid b) is selected from $C_{16}$-$C_{25}$ acids or from their mixtures with $C_1$-$C_4$ acids.

14. Process of preparation of the aqueous dispersion as defined according to any one of claims 1 to 13, **characterized in that** it comprises the steps of :

    i) preparing an aqueous polymeric dispersion a) as defined in any one of claims 1 to 13, either by emulsion polymerisation or by dispersing in water a preformed polymer,
    ii) adding in the said aqueous polymeric dispersion a) at least one organic carboxylic acid b) as defined according to any one of claims 1 to 13, with, when the said acid is a solid at room temperature, heating it to a liquid state before adding it, at the same temperature, to the preheated aqueous dispersion a), or optionally previously to adding it, diluting it in water,
    iii) mixing the aqueous dispersion a) with acid b), to obtain an homogeneous aqueous dispersion,
    iv) adjusting the pH of the aqueous polymeric dispersion a) at pH < pKa to favour the acid form of the said organic carboxylic acid b).

15. End-use composition **characterized in that** it comprises at least one aqueous polymeric dispersion as defined according to any one of claims 1 to 13, or obtainable by a process as defined according to claim 14.

16. Composition according to claim 15, **characterized in that** it is an aqueous paint or varnish or ink or glue or adhesive or a construction chemical composition, a fibre sizing composition or a leather or a textile treatment composition or a protective coating composition selected from industrial coating compositions or from food coating compositions.

17. Composition according to claims 15 or 16, **characterized in that** it is a glue or adhesive composition and **in that** the said aqueous dispersion is as defined according to claim 7.

18. Composition according to claims 15 or 16, **characterized in that** it is a protective coating composition, selected from a protective industrial coating composition or a protective food coating composition and **in that** the said aqueous dispersion is as defined according to claim 8.

19. Composition according to claim 15, **characterized in that** it is a packaging adhesive composition, a fibre sizing composition, a construction chemical composition, a textile or a leather treatment composition or a protective industrial coating composition or a food coating composition and **in that** the said aqueous dispersion is as defined according to claims 6 or 7.

20. Composition according to claim 19, **characterized in that** it is a removable protective coating composition selected from a removable or peelable industrial coating composition or a removable or peelable food coating composition.

21. Composition according to claim 15, **characterized in that** it is a varnish or ink or a paint composition and **in that** the said aqueous dispersion is as defined according to claim 4.

22. Composition according to claim 15, **characterized in that** it is a varnish or ink or a paint composition and **in that** the said aqueous dispersion is as defined according to claim 3.

23. Composition according to claim 15, **characterized in that** it is a protective industrial coating composition or a food protective coating composition and **in that** the said aqueous polymeric dispersion is as defined according to claims 13.

24. Composition according to claim 23, **characterized in that** the said aqueous polymeric dispersion is as defined according to claim 13 and **in that** it is a peelable or removable protective coating composition.

25. Use of at least one aqueous dispersion as defined according to any one of claims 1 to 13, **characterized in that** it is in aqueous paints, varnishes, inks, glues, adhesives, construction materials, fibre sizing compositions or textile or leather treatment compositions, food coatings or packagings or in a specific substrate temporary (provisional) protection or high Tg coatings.

26. Use according to claim 25, **characterized in that** the said aqueous dispersion is as defined according to claim 7 and **in that** the said use is in aqueous adhesive compositions or glue compositions for wood and packaging or **in that** the said aqueous dispersion is as defined according to claim 4 and **in that** the said use is for high Tg coatings.

27. Use of an aqueous polymeric dispersion as defined according to claim 13, **characterized in that** it is in industrial protective coatings or in food protective coatings and **in that** the said use is in removable or peelable industrial protective coatings or in removable or peelable food protective coatings.

28. Coated or treated substrate as resulting from the application and filmification of at least one layer of at least one end-use composition as defined according to any one of claims 15 to 24 on the said substrate.

29. A removable or peelable protective coating **characterized in that** it results from the application and filmification of at least one layer of at least one end-use protective coating composition, comprising an aqueous dispersion as defined according to any one of claims 6 or 7 or according to claim 13.

30. Method for improving the peelability of an industrial protective coating or of a food protective coating as applied to a solid substrate, the coating resulting from the drying of an aqueous polymeric dispersion as defined according to claim 1, **characterized in that** the said method comprises the steps of adding and mixing with the said polymeric dispersion a) as defined in claim 1, an organic acid b) selected from $C_{16}$-$C_{25}$ acids or of their mixtures with $C_1$-$C_4$ acids and then drying the applied coating on the substrate.

**Patentansprüche**

1. Wässrige Polymerdispersion, **dadurch gekennzeichnet, dass**:

   - sie Folgendes umfasst:

      a) mindestens ein Polymer in wässriger Dispersion mit einer Mindestfilmbildungstemperatur (MFFT; gemessen gemäß der Methode ISO 2115) zwischen 0 und 100°C,
      b) 0,05 bis 30 Gew.-%, vorzugsweise 0,1 bis 30 Gew.-%, bezogen auf die wässrige Dispersion a), mindestens einer organischen Carbonsäure, die aus $C_{16}$- bis $C_{25}$-Säuren oder Mischungen davon mit $C_1$-$C_4$-Säuren ausgewählt ist,

   - die organische Carbonsäure b) und ihr Gehalt in der wässrigen Dispersion so gewählt sind, dass sie mit der wässrigen Polymerdispersion a) als solcher und mit dem Polymer als Polymer selbst kompatibel sind,

- die Säure b) in ihrer Säureform vorliegt, wobei der pH-Wert (gemessen gemäß der Methode ISO 976) der wässrigen Dispersion a) so eingestellt ist, dass er unter dem pKa-Wert der organischen Carbonsäure liegt,

und dass

- die Dispersion a) einen Feststoffgehalt (gemessen gemäß der Methode ISO 3251) von 25 bis 70% w/w, vorzugsweise von 35 bis 70% w/w, aufweist,
- das Gewichtsverhältnis von Säure b) zu Polymer nicht mehr als 50% beträgt.

2. Wässrige Dispersion nach Anspruch 1, **dadurch gekennzeichnet, dass** die organische Carbonsäure in einer Menge von 0,05 bis 15 Gew.-%, vorzugsweise von 0,1 bis 10 Gew.-%, weiter bevorzugt von 0,1 bis 5 Gew.-%, bezogen auf die wässrige Dispersion a), vorliegt.

3. Wässrige Dispersion nach Anspruch 2, **dadurch gekennzeichnet, dass** die MFFT des Polymers höchstens 25°C beträgt.

4. Wässrige Dispersion nach Anspruch 1, **dadurch gekennzeichnet, dass** die organische Carbonsäure in einer Menge von 5 bis 30 Gew.-%, vorzugsweise 10 bis 20 Gew.-%, bezogen auf die wässrige Dispersion a), vorliegt und dass die MFFT des Polymers in wässriger Dispersion mehr als 25°C, vorzugsweise 30 bis 70°C, beträgt.

5. Wässrige Dispersion nach einem der Ansprüche 1 bis 4, **dadurch gekennzeichnet, dass**:

i) dann, wenn es sich bei dem Polymer um ein hydrophiles Polymer mit einem HI von mindestens 10 g/l, vorzugsweise mindestens 15 g/l, handelt, die organische Säure aus $C_{16}$ bis $C_{25}$ oder Mischungen von $C_1$-$C_4$ mit $C_{16}$ bis $C_{25}$ ausgewählt ist, und
ii) dann, wenn es sich bei dem Polymer um ein hydrophobes Polymer mit einem HI von weniger als 15 g/l, vorzugsweise weniger als 10 g/l, handelt, die organische Säure aus $C_{16}$ bis $C_{25}$ ausgewählt ist.

6. Wässrige Dispersion nach einem der Ansprüche 1 bis 5, **dadurch gekennzeichnet, dass** die organische Carbonsäure aus $C_{16}$- bis $C_{25}$-Säuren ausgewählt ist und dass die organische Carbonsäure mindestens eine ethylenische Ungesättigtheit trägt.

7. Wässrige Dispersion nach einem der Ansprüche 1 bis 4 oder 5, **dadurch gekennzeichnet, dass** es sich bei dem Polymer um ein hydrophiles Polymer mit einem HI von mindestens 15 g/l handelt und die organische Carbonsäure aus einer binären oder ternären Mischung einer $C_1$- bis $C_4$-Säure mit einer $C_{16}$- bis $C_{25}$-Säure ausgewählt ist, wobei letztere mindestens eine ethylenische Ungesättigtheit trägt.

8. Wässrige Dispersion nach Anspruch 6 oder 7, **dadurch gekennzeichnet, dass** das Gewichtsverhältnis der Säure 0,05 bis 5 Gew.-%, vorzugsweise 0,1 bis 5 Gew.-%, bezogen auf die Dispersion a), beträgt.

9. Wässrige Dispersion nach einem der Ansprüche 1 bis 8, **dadurch gekennzeichnet, dass** das Polymer entweder auf Homopolymeren von Acryl-Monomeren und/oder auf Copolymeren von Acryl-Monomeren alleine oder auf Styrol-Acryl-Copolymeren oder auf reinen Vinylester(Vinylalkoholester)-Homopolymeren und/oder -Copolymeren basiert.

10. Wässrige Dispersion nach einem der Ansprüche 1 bis 9, **dadurch gekennzeichnet, dass** es sich bei dem Polymer um mindestens eines der Homopolymere von Vinylestern, die aus Vinylacetat oder Vinylpropionat oder Vinylbutyrat oder Vinylversatat ausgewählt sind, und/oder mindestens ein Copolymer derselben Vinylester mit mindestens einem von Maleat-Comonomeren oder Acryl-Comonomeren oder Ethylen handelt.

11. Wässrige Dispersion nach Anspruch 7, **dadurch gekennzeichnet, dass** die wässrige Polymerdispersion a) mit entweder einem Schutzkolloid, das aus teilweise oder vollständig hydrolysiertem Polyvinylacetat (Polyvinylalkohol) und Cellulosederivaten ausgewählt ist, und/oder mit mindestens einem Tensid, das aus anionischen Tensiden und/oder nichtionischen Tensiden ausgewählt ist, stabilisiert ist.

12. Wässrige Dispersion nach Anspruch 7, **dadurch gekennzeichnet, dass** das Polymer mit einem HI von mindestens 15 g/l hydrophil ist und aus Vinylacetat-Homopolymeren und/oder aus Vinylacetat-Copolymeren mit überwiegendem Vinylacetat-Gehalt oder aus Acryl-Homopolymeren und/oder -Copolymeren ausgewählt ist.

13. Wässrige Dispersion nach einem der Ansprüche 1 bis 3, **dadurch gekennzeichnet, dass** das Polymer der Dispersion a) hydrophil ist und aus Vinylacetat(VAM)-Copolymeren, vorzugsweise Copolymeren mit Maleat- und/oder Fumaratestern von $C_1$-$C_{12}$-Alkoholen, ausgewählt ist und dass die Säure b) aus $C_{16}$- bis $C_{25}$-Säuren oder Mischungen davon mit $C_1$-$C_4$-Säuren ausgewählt ist.

14. Verfahren zur Herstellung der wässrigen Dispersion wie gemäß einem der Ansprüche 1 bis 13 definiert, **dadurch gekennzeichnet, dass** es folgende Schritte umfasst:

i) Herstellen einer wässrigen Polymerdispersion a) wie gemäß einem der Ansprüche 1 bis 13 definiert, entweder durch Emulsionspolymerisation oder durch Dispergieren eines vorgebildeten Polymers in Wasser,
ii) Zugeben mindestens einer organischen Carbonsäure b) wie gemäß einem der Ansprüche 1 bis 13 definiert zu der wässrigen Polymerdispersion a), wobei die Säure dann, wenn sie bei Raumtemperatur fest ist, bis zum flüssigen Zustand erhitzt wird, bevor sie bei der gleichen Temperatur zu der vorerhitzten wässrigen Dispersion a) gegeben wird oder gegebenenfalls vor der Zugabe in Wasser verdünnt wird,
iii) Mischen der wässrigen Dispersion a) mit der Säure b) unter Erhalt einer homogenen wässrigen Dispersion,
iv) Einstellen des pH-Werts der wässrigen Polymerdispersion a) auf pH < pKa zur Begünstigung der Säureform der organischen Carbonsäure b).

15. Endverwendungszusammensetzung, **dadurch gekennzeichnet, dass** sie mindestens eine wässrige Polymerdispersion wie gemäß einem der Ansprüche 1 bis 13 definiert oder eine durch ein Verfahren wie gemäß Anspruch 14 definiert erhältliche Polymerdispersion umfasst.

16. Zusammensetzung nach Anspruch 15, **dadurch gekennzeichnet, dass** es sich um ein wässriges Anstrichmittel oder einen wässrigen Lack oder eine wässrige Tinte oder einen wässrigen Leim oder Klebstoff oder eine bauchemische Zusammensetzung, eine Faserschlichtezusammensetzung oder eine Leder- oder eine Textilbehandlungszusammensetzung oder eine schützende Beschichtungszusammensetzung, die aus technischen Beschichtungszusammensetzungen oder aus Lebensmittelbeschichtungszusammensetzungen ausgewählt ist, handelt.

17. Zusammensetzung nach Anspruch 15 oder 16, **dadurch gekennzeichnet, dass** es sich um eine Leim- oder Klebstoffzusammensetzung handelt und dass die wässrige Dispersion gemäß Anspruch 7 definiert ist.

18. Zusammensetzung nach Anspruch 15 oder 16, **dadurch gekennzeichnet, dass** es sich um eine schützende Beschichtungszusammensetzung, die aus einer schützenden technischen Beschichtungszusammensetzung oder einer schützenden Lebensmittelbeschichtungszusammensetzung ausgewählt ist, handelt und dass die wässrige Dispersion wie gemäß Anspruch 8 definiert ist.

19. Zusammensetzung nach Anspruch 15, **dadurch gekennzeichnet, dass** es sich um eine Verpackungsklebstoffzusammensetzung, eine Faserschlichtezusammensetzung, eine bauchemische Zusammensetzung, eine Textil- oder Lederbehandlungszusammensetzung oder eine schützende technische Beschichtungszusammensetzung oder eine Lebensmittelbeschichtungszusammensetzung handelt und dass die wässrige Dispersion wie gemäß Anspruch 6 oder 7 definiert ist.

20. Zusammensetzung nach Anspruch 19, **dadurch gekennzeichnet, dass** es sich um eine entfernbare schützende Beschichtungszusammensetzung, die aus einer entfernbaren oder abziehbaren technischen Beschichtungszusammensetzung oder einer entfernbaren oder abziehbaren Lebensmittelbeschichtungszusammensetzung ausgewählt ist, handelt.

21. Zusammensetzung nach Anspruch 15, **dadurch gekennzeichnet, dass** es sich um eine Lack- oder Tintenoder eine Anstrichmittelzusammensetzung handelt und dass die wässrige Dispersion wie gemäß Anspruch 4 definiert ist.

22. Zusammensetzung nach Anspruch 15, **dadurch gekennzeichnet, dass** es sich um eine Lack- oder Tintenoder eine Anstrichmittelzusammensetzung handelt und dass die wässrige Dispersion wie gemäß Anspruch 3 definiert ist.

23. Zusammensetzung nach Anspruch 15, **dadurch gekennzeichnet, dass** es sich um eine schützende technische Beschichtungszusammensetzung oder eine schützende Lebensmittelbeschichtungszusammensetzung handelt und dass die wässrige Polymerdispersion wie gemäß Anspruch 13 definiert ist.

24. Zusammensetzung nach Anspruch 23, **dadurch gekennzeichnet, dass** die wässrige Polymerdispersion wie gemäß Anspruch 13 definiert ist und dass es sich um eine abziehbare oder entfernbare schützende Beschichtungszusammensetzung handelt.

25. Verwendung mindestens einer wässrigen Dispersion gemäß einem der Ansprüche 1 bis 13, **dadurch gekennzeichnet, dass** sie in wässrigen Anstrichmitteln, Lacken, Tinten, Leimen, Klebstoffen, Baustoffen, Faserschlichtezusammensetzungen oder Textil- oder Lederbehandlungszusammensetzungen, Lebensmittelbeschichtungen oder Verpackungen oder beim vorübergehenden (provisorischen) Schutz eines spezifischen Substrats oder in Beschichtungen mit hoher Tg erfolgt.

26. Verwendung nach Anspruch 25, **dadurch gekennzeichnet, dass** die wässrige Dispersion wie gemäß Anspruch 7 definiert ist und dass die Verwendung in wässrigen Klebstoffzusammensetzungen oder Leimzusammensetzungen für Holz und Verpackungen erfolgt oder dass die wässrige Dispersion wie gemäß Anspruch 4 definiert ist und dass die Verwendung für Beschichtungen mit hoher Tg erfolgt.

27. Verwendung einer wässrigen Polymerdispersion gemäß Anspruch 13, **dadurch gekennzeichnet, dass** sie in technischen schützenden Beschichtungen oder in schützenden Lebensmittelbeschichtungen erfolgt und dass die Verwendung in entfernbaren oder abziehbaren technischen schützenden Beschichtungen oder in entfernbaren oder abziehbaren schützenden Lebensmittelbeschichtungen erfolgt.

28. Beschichtetes oder behandeltes Substrat, wie erhalten durch die Aufbringung und Verfilmung mindestens einer Schicht mindestens eines Endverwendungszusammensetzung wie gemäß einem der Ansprüche 15 bis 24 definiert auf das bzw. dem Substrat.

29. Entfernbare oder abziehbare schützende Beschichtung, **dadurch gekennzeichnet, dass** sie durch die Aufbringung und Verfilmung mindestens einer Schicht mindestens einer schützenden Endverwendungsbeschichtungszusammensetzung, umfassend eine wie gemäß einem der Ansprüche 6 oder 7 oder gemäß Anspruch 13 definierte wässrige Dispersion, erhalten wird.

30. Verfahren zur Verbesserung der Abziehbarkeit einer technischen schützenden Beschichtung oder einer schützenden Lebensmittelbeschichtung, die auf ein festes Substrat aufgebracht ist, wobei sich die Beschichtung durch Trocknen einer wässrigen Polymerdispersion gemäß Anspruch 1 ergibt, **dadurch gekennzeichnet, dass** man bei dem Verfahren die Polymerdispersion a) gemäß Anspruch 1 mit einer aus $C_{16}$-$C_{25}$-Säuren oder Mischungen davon mit $C_1$-$C_4$-Säuren ausgewählten organischen Säure b) versetzt und damit mischt und dann die aufgebrachte Beschichtung auf dem Substrat trocknet.

## Revendications

1. Dispersion polymère aqueuse, **caractérisée en ce que**

    - elle comprend :

        a) au moins un polymère en dispersion aqueuse, ayant une température minimum de formation de film (TMFF, mesurée selon la méthode ISO 2115) de 0 à 100 °C,
        b) de 0,05 à 30 %, préférablement de 0,1 à 30 % en poids, relativement à ladite dispersion aqueuse a), d'au moins d'un acide carboxylique organique sélectionné parmi des acides $C_{16}$-$C_{25}$ ou leurs mélanges avec des acides $C_1$-$C_4$,

        - ledit acide carboxylique organique b) et la quantité dans laquelle il est présent dans ladite dispersion aqueuse sont sélectionnés pour être compatibles avec ladite dispersion polymère aqueuse a) en tant que telle, et avec ledit polymère, sous la forme du polymère lui-même,
        - ledit acide b) est présent sous sa forme acide, le pH (mesuré selon la méthode ISO 976) de ladite dispersion aqueuse a) étant ajusté pour être inférieur à la valeur pKa dudit acide carboxylique organique,

    et **en ce que**

        - ladite dispersion a) a une teneur en solides (mesurée selon la méthode ISO 3251) de 25 à 70 %, préférablement de 35 à 70 % p/p,

**EP 2 158 260 B1**

- le rapport pondéral de l'acide b) contre ledit polymère ne dépasse pas 50 %.

2.  Dispersion aqueuse selon la revendication 1, **caractérisée en ce que** ledit acide carboxylique organique est présent dans une quantité de 0,05 à 15 %, préférablement de 0,1 à 10 %, plus préférablement de 0,1 à 5 % en poids, relativement à ladite dispersion aqueuse a).

3.  Dispersion aqueuse selon la revendication 2, **caractérisée en ce que** la TMFF dudit polymère est de 25 °C au maximum.

4.  Dispersion aqueuse selon la revendication 1, **caractérisée en ce que** ledit acide carboxylique organique est présent dans une quantité de 5 à 30 %, préférablement de 10 à 20 % en poids, relativement à ladite dispersion aqueuse a) et **en ce que** la TMFF dudit polymère en dispersion aqueuse est supérieure à 25 °C, préférablement de 30 à 70 °C.

5.  Dispersion aqueuse selon l'une quelconque des revendications 1 à 4, **caractérisée en ce que** :

    i) quand ledit polymère est un polymère hydrophile, ayant un indice d'hydrophilie (IH) d'au moins 10 g/l, préférablement d'au moins 15 g/l, ledit acide organique est sélectionné parmi des acides $C_{16}$-$C_{25}$ ou des mélanges d'acides $C_1$-$C_4$ avec des acides $C_{16}$-$C_{25}$ et
    ii) quand ledit polymère est un polymère hydrophobe ayant un IH inférieur à 15 g/l, préférablement inférieur à 10 g/l, ledit acide organique est sélectionné parmi des acides $C_{16}$-$C_{25}$.

6.  Dispersion aqueuse selon l'une quelconque des revendications 1 à 5, **caractérisée en ce que** ledit acide carboxylique organique est sélectionné parmi des acides $C_{16}$-$C_{25}$ et **en ce que** ledit acide carboxylique organique porte au moins une insaturation éthylénique.

7.  Dispersion aqueuse selon l'une quelconque des revendications 1 à 4 ou 5, **caractérisée en ce que** ledit polymère est un polymère hydrophile ayant un IH d'au moins 15 g/l et ledit acide carboxylique organique est sélectionné parmi un mélange binaire ou ternaire d'un acide $C_1$-$C_4$ avec un acide $C_{16}$-$C_{25}$, ce dernier portant au moins une insaturation éthylénique.

8.  Dispersion aqueuse selon les revendications 6 ou 7, **caractérisée en ce que** le rapport pondéral dudit acide est de 0,05 à 5 %, préférablement de 0,1 à 5 % en poids, relativement à ladite dispersion a).

9.  Dispersion aqueuse selon l'une quelconque des revendications 1 à 8, **caractérisée en ce que** ledit polymère est à base d'homopolymères de monomères acryliques et/ou de copolymères constitués seulement de monomères acryliques, ou de copolymères styrène-acryliques, ou exclusivement d'homopolymères et/ou de copolymères d'esters vinyliques (esters d'alcool vinylique).

10. Dispersion aqueuse selon l'une quelconque des revendications 1 à 9, **caractérisée en ce que** ledit polymère est au moins l'un des homopolymères d'esters vinyliques sélectionnés parmi l'acétate de vinyle ou le propionate de vinyle ou le butyrate de vinyle ou le versatate de vinyle et/ou d'au moins un copolymère des mêmes esters vinyliques avec au moins l'un de comonomères maléates, ou de comonomères acryliques, ou de l'éthylène.

11. Dispersion aqueuse selon la revendication 7, **caractérisée en ce que** ladite dispersion polymère aqueuse a) est stabilisée avec un colloïde protecteur, sélectionné parmi un acétate de polyvinyle en partie ou entièrement hydrolysé (alcool polyvinylique), des dérivés de cellulose, et/ou avec au moins un tensioactif sélectionné parmi des tensioactifs anioniques et/ou non ioniques.

12. Dispersion aqueuse selon la revendication 7, **caractérisée en ce que** ledit polymère est hydrophile avec un IH d'au moins 15 g/l et sélectionné parmi des homopolymères d'acétate de vinyle et/ou parmi des copolymères d'acétate de vinyle constitués principalement d'acétate de vinyle, ou parmi des homopolymères et/ou des copolymères acryliques.

13. Dispersion aqueuse selon l'une quelconque des revendications 1 à 3, **caractérisée en ce que** le polymère de ladite dispersion a) est hydrophile et sélectionné parmi des copolymères d'acétate de vinyle (VAM), préférablement des copolymères avec des esters de maléates et/ou de fumarates d'alcools $C_1$-$C_{12}$, et **en ce que** ledit acide b) est sélectionné parmi des acides $C_{16}$-$C_{25}$ ou leurs mélanges avec des acides $C_1$-$C_4$.

**20**

**14.** Procédé de préparation de la dispersion aqueuse telle que définie selon l'une quelconque des revendications 1 à 13, **caractérisé en ce qu'**il comprend les étapes qui consistent à :

i) préparer une dispersion polymère aqueuse a) telle que définie dans l'une quelconque des revendications 1 à 13, par polymérisation en émulsion ou par dispersion dans de l'eau d'un polymère préformé,
ii) ajouter dans ladite dispersion polymère aqueuse a) au moins un acide carboxylique organique b) tel que défini selon l'une quelconque des revendications 1 à 13, avec, quand ledit acide est un solide à la température ambiante, son chauffage jusqu'à un état liquide avant de l'ajouter, à la même température, à la dispersion aqueuse préchauffée a), ou optionnellement, avant de l'ajouter, sa dilution dans de l'eau,
iii) mélanger la dispersion aqueuse a) avec l'acide b), pour obtenir une dispersion aqueuse homogène,
iv) ajuster le pH de la dispersion polymère aqueuse a) jusqu'à un pH < pKa pour favoriser la forme acide dudit acide carboxylique organique b).

**15.** Composition prête pour l'utilisation finale, **caractérisée en ce qu'**elle comprend au moins une dispersion polymère aqueuse telle que définie selon l'une quelconque des revendications 1 à 13, ou pouvant être obtenue par un procédé tel que défini selon la revendication 14.

**16.** Composition selon la revendication 15, **caractérisée en ce qu'**il s'agit d'une peinture ou d'un vernis ou d'une encre ou d'une colle ou d'un adhésif aqueux ou d'une composition chimique de construction, d'une composition d'ensimage de fibres, ou d'une composition pour le traitement du cuir ou de textiles, ou d'une composition de revêtement de protection sélectionnée parmi des compositions de revêtements industriels ou des compositions de revêtements alimentaires.

**17.** Composition selon les revendications 15 ou 16, **caractérisée en ce qu'**il s'agit d'une composition de colle ou d'adhésif et **en ce que** ladite dispersion aqueuse est telle que définie selon la revendication 7.

**18.** Composition selon les revendications 15 ou 16, **caractérisée en ce qu'**il s'agit d'une composition de revêtement de protection, sélectionnée parmi une composition de revêtement de protection industriel ou une composition de revêtement de protection alimentaire et **en ce que** ladite dispersion aqueuse est telle que définie selon la revendication 8.

**19.** Composition selon la revendication 15, **caractérisée en ce qu'**il s'agit d'une composition d'adhésif d'emballage, d'une composition d'ensimage de fibres, d'une composition chimique de construction, d'une composition pour le traitement de textiles ou du cuir, ou d'une composition de revêtement de protection industriel ou d'une composition de revêtement alimentaire, et **en ce que** ladite dispersion aqueuse est telle que définie selon les revendications 6 ou 7.

**20.** Composition selon la revendication 19, **caractérisée en ce qu'**il s'agit d'une composition de revêtement de protection amovible sélectionnée parmi une composition de revêtement industriel amovible ou pelable ou une composition de revêtement alimentaire amovible ou pelable.

**21.** Composition selon la revendication 15, **caractérisée en ce qu'**il s'agit d'une composition de vernis ou d'encre ou de peinture et **en ce que** ladite dispersion aqueuse est telle que définie selon la revendication 4.

**22.** Composition selon la revendication 15, **caractérisée en ce qu'**il s'agit d'une composition de vernis ou d'encre ou de peinture et **en ce que** ladite dispersion aqueuse est telle que définie selon la revendication 3.

**23.** Composition selon la revendication 15, **caractérisée en ce qu'**il s'agit d'une composition de revêtement de protection industriel ou d'une composition de revêtement de protection alimentaire et **en ce que** ladite dispersion polymère aqueuse est telle que définie selon la revendication 13.

**24.** Composition selon la revendication 23, **caractérisée en ce que** ladite dispersion polymère aqueuse est telle que définie selon la revendication 13 et **en ce qu'**il s'agit d'une composition de revêtement de protection pelable ou amovible.

**25.** Utilisation d'au moins une dispersion aqueuse telle que définie selon l'une quelconque des revendications 1 à 13, **caractérisée en ce qu'**elle se situe dans des peintures, des vernis, des encres, des colles ou des adhésifs aqueux, des matériaux de construction, des compositions d'ensimage de fibres ou des compositions de traitement des textiles ou du cuir, des revêtements ou des emballages alimentaires, ou dans une protection (provisoire) temporaire de substrats spécifiques, ou des revêtements à Tg élevée.

26. Utilisation selon la revendication 25, **caractérisée en ce que** ladite dispersion aqueuse est telle que définie selon la revendication 7 et **en ce que** ladite utilisation se situe dans des compositions d'adhésifs ou des compositions de colles aqueuses destinées au bois et aux emballages, ou **en ce que** ladite dispersion aqueuse est telle que définie selon la revendication 4 et **en ce que** ladite utilisation est pour des revêtements à Tg élevée.

27. Utilisation d'une dispersion polymère aqueuse telle que définie selon la revendication 13, **caractérisée en ce qu'**elle se situe dans des revêtements de protection industriels ou dans des revêtements de protection alimentaires et **en ce que** ladite utilisation se situe dans des revêtements de protection industriels amovibles ou pelables ou dans des revêtements de protection alimentaires amovibles ou pelables.

28. Substrat revêtu ou traité, résultant de l'application et de la transformation en film d'au moins une couche d'au moins une composition prête pour l'utilisation finale telle que définie selon l'une quelconque des revendications 15 à 24 sur ledit substrat.

29. Revêtement de protection amovible ou pelable, **caractérisé en ce qu'**il résulte de l'application et de la transformation en film d'au moins une couche d'au moins une composition de revêtement de protection prête pour l'utilisation finale, comprenant une dispersion aqueuse telle que définie selon l'une quelconque des revendications 6 ou 7 ou selon la revendication 13.

30. Procédé d'amélioration de la pelabilité d'un revêtement de protection industriel ou d'un revêtement de protection alimentaire tel qu'appliqué sur un substrat solide, le revêtement résultant du séchage d'une dispersion polymère aqueuse telle que définie selon la revendication 1, **caractérisé en ce que** ledit procédé comprend les étapes qui consistent à ajouter et à mélanger avec ladite dispersion polymère a), telle que définie dans la revendication 1, un acide organique b) sélectionné parmi des acides $C_{16}$-$C_{25}$ ou leurs mélanges avec des acides $C_1$-$C_4$, puis à sécher le revêtement appliqué sur le substrat.

## REFERENCES CITED IN THE DESCRIPTION

**Patent documents cited in the description**

- EP 113443 A
- FR 1053706
- US 3287300 A
- CA 2463199